# EUROPEAN PATENT SPECIFICATION

(11) **EP 4 516 127 B1**
(45) Date of publication and mention of the grant of the patent: **03.12.2025**
(21) Application number: 24192099.0
(22) Date of filing: 31.07.2024
(51) Int. Cl.: A24B 15/167, A24B 15/22, A24B 15/18, A24B 15/24, A24F 40/10

(54) **METHOD FOR PREPARING ADDITIVE LIQUID OF ATOMIZER**
VERFAHREN ZUR HERSTELLUNG EINER ZUSATZFLÜSSIGKEIT EINES ZERSTÄUBERS
PROCÉDÉ DE PRÉPARATION D'UN LIQUIDE ADDITIF D'ATOMISEUR

(30) Priority: 30.08.2023 CN 202311107627
(43) Date of publication of application: 05.03.2025
(73) Proprietor: Smoore International Holdings Limited, George Town, Grand Cayman, KY1-1111 (KY)
(72) Inventor: DU, Zhenxing, Shenzhen Guangdong, 518102 (CN); LIAO, Xiaoxiang, Shenzhen Guangdong, 518102 (CN)
(74) Representative: Westphal, Mussgnug & Partner, Patentanwälte mbB

(56) References cited:
- EP-A1- 1 813 158
- CN-A- 115 251 454
- US-A- 3 616 801
- US-A- 4 302 308
- US-A- 5 810 020
- US-A1- 2008 178 894

## Description

### TECHNICAL FIELD

The present invention relates to the field of electronic atomization technologies, and in particular, to a method for preparing an additive liquid of an atomizer.

### BACKGROUND

With the landing of the new national standards, tobacco-flavored electronic atomization devices have become the mainstream in China. However, due to the presence of tobacco extracts in an atomization liquid, problems such as burnt coil and gunk buildup of such products frequently emerge. In addition, there is a problem of poor atomization performance of the atomization liquid, making it difficult to implement inhaling experience of a large vapor amount and a large quantity of puffs (for example, greater than 1000 puffs).

To resolve these problems, current research mainly focuses on removing large molecules (such as polysaccharides, proteins, starch, and pectin) from tobacco or tobacco extracts by using some technologies. This causes removal of fragrance components along with the large molecules, resulting in excessive fragrance loss. In addition, in these methods, the problems such as burnt coil and gunk buildup are not completely resolved, and long-term inhaling experience of a large vapor quantity and a large quantity of puffs cannot be implemented.

Publications US 3 616 801 A, US 2008/178894 A1, US 5 810 020 A, EP 1 813 158 A1, CN 115 251 454 A, and US 4 302 308 A are considered to be relevant to the present application.

Therefore, there is a strong need to preserve fragrance and resolve the problems such as burnt coil and gunk buildup.

### SUMMARY

Accordingly, a first aspect of the present invention provides a method for preparing an additive liquid of an atomizer. The problem underlying the present application is solved by a method for preparing an additive liquid of an atomizer having the features of claim 1.

The the method of the present invention includes a step of removing cations.

In a process of preparing the additive liquid of the atomizer, a step of removing cations is introduced, thereby reducing a vapor attenuation rate, and improving inhaling experience. In addition, a fouling amount is reduced, and problems such as burnt coil and gunk buildup of the atomizer are resolved.

The method of the present invention further includes a step of removing anions to obtain a liquid that in some implementations has an electrical conductivity less than 1000 µS/cm, preferably less than 500 µS/cm.

On the basis of removing cations, in the process of preparing the additive liquid of the atomizer, the step of removing anions is introduced, so that not only a vapor attenuation rate is further reduced, but also an atomization amount is additionally increased, and a fouling amount is further reduced, thereby further optimizing inhaling experience, and reducing a probability of causing burnt coil and gunk buildup.

In some implementations, the cations are selected from one or more of manganese ions, iron ions, zinc ions, copper ions, potassium ions, magnesium ions, calcium ions, and sodium ions.

In some implementations, the step of removing cations is performed by using a cation exchange resin. In some implementations, the step of removing anions is performed by using an anion exchange resin.

The step of removing cations and the step of removing anions are implemented through electrodialysis.

When electrodialysis processing is introduced in the process of preparing the additive liquid of the atomizer, compared with an ion exchange method, an atomization amount is further increased, and a vapor attenuation rate is further reduced, thereby providing excellent atomization performance, and improving inhaling experience. In addition, a fouling amount is further reduced, and further, a probability of causing burnt coil and gunk buildup is further reduced. The inventors do not want to be bound by theory because the electrodialysis method not only removes cations and anions, but also removes organic acids and organic bases from the liquid. In addition, compared with an ion exchange method, an operation step of the electrodialysis method is more simplified, and processing efficiency is greatly improved. The electrodialysis method can maintain the mouthfeel of the atomization liquid.

The voltage during the electrodialysis is set to 1 V to 30 V; a current during the electrodialysis is set to 0.05 A to 20 A; and duration of the electrodialysis is 0.1 hour to 24 hours.

In a preferred implementation, the voltage during the electrodialysis is set to 12 V to 16 V, and the current during the electrodialysis is set to 5 A to 10 A; and duration of the electrodialysis is 1 hour to 4 hours.

The foregoing parameters are selected, so that use of the electrodialysis method further increases an atomization amount and reduces a vapor attenuation rate, thereby providing better inhaling experience.

In some implementations, before or after the removal step, the method further includes a step of adding an atomization solvent and/or an essence.

Before the removal step, the method further includes a step of diluting a to-be-processed substance with water to obtain a diluted liquid with a viscosity of 1 cp to 100 cp, and after the removal step, the method further includes a step of removing water. The diluting is performed by adding water with a volume greater than or equal to 0.5 and less than or equal to 10 times a volume of the to-be-processed substance. In this dilution, not only a liquid viscosity is moderate, but also cations and/or anions are removed. That a large quantity of water needs to be removed in the step of removing water is avoided, thereby shortening duration of removing water and improving efficiency of removing water.

An additive liquid of an atomizer prepared by using the method of the present invention is also disclosed.

An atomizer, including a liquid storage chamber, an atomization component, and the additive liquid of the present invention is also disclosed.
The liquid storage chamber is configured to accommodate an additive liquid of the atomizer. The atomization component is configured to form an aerosol from the additive liquid of the atomizer. The atomization component is in fluid communication with the liquid storage chamber.

### BRIEF DESCRIPTION OF THE DRAWINGS

FIG. 1 is an XLY atomization liquid before processing and a fouling diagram of the XLY atomization liquid after processing in an electronic atomization device according to Embodiment 1 and Embodiment 9 that are not covered by the claims;
FIG. 2 is a ZBY atomization liquid before processing and a fouling diagram of the ZBY atomization liquid after processing in an electronic atomization device according to Embodiment 2 and Embodiment 12 not covered by the claims;
FIG. 3 is a DFY atomization liquid before processing and a fouling diagram of the DFY atomization liquid after processing in an electronic atomization device according to Embodiment 3; and
FIG. 4 is an NB2 atomization liquid before processing and a fouling diagram of the NB2 atomization liquid after processing in an electronic atomization device according to Embodiment 4.

### DETAILED DESCRIPTION

The following clearly and completely describes the technical solutions in the implementations of the present invention with reference to the implementations of the present invention.

In the entire specification, unless otherwise noted, the terms used herein shall be understood to mean what is normally used in the art. Therefore, unless otherwise defined, all technical and scientific terms used herein have the same meaning as those of ordinary skill in the art. The meaning in this specification is preferred if there is any contradiction.

It should be noted that, in the present invention, the term "include" or any other variant thereof is intended to cover non-exclusive inclusions, so that a method or apparatus that includes a series of elements includes not only explicitly recorded elements, but also other elements that are not explicitly listed, or elements that are inherent to the implementation of the method or apparatus. **In** the case in which there is no further limitation, an element defined by a statement "containing ...... " does not exclude that another related element exists in a method or an apparatus including the element.

Currently, an electronic atomization device with a tobacco taste becomes the mainstream, and an atomization liquid added to the atomization apparatus includes a tobacco extract. This causes problems of burnt coil and gunk buildup of such a product, causes a decrease in atomization performance (for example, a large vapor quantity and a large quantity of puffs), and then seriously affects inhaling experience.

To solve such problems, some researchers use solvent extraction, column chromatography, enzymolysis approach, supercritical extraction, and molecular distillation to reduce the content of macromolecules. However, these methods remove fragrance components (e.g., esters and ketones) while removing macromolecules, resulting in excessive fragrance loss. In addition, in these methods, the problems such as burnt coil and gunk buildup are not well resolved, and long-term inhaling experience of a large vapor quantity and a large quantity of puffs cannot be implemented.

Both burnt coil and gunk buildup are caused by excessive fouling of an atomized aerosol in the atomizer. The inventors of the present invention unexpectedly find that cations in an additive liquid of the atomizer play a relatively important role in fouling generation.

To this end, the present invention provides a method for preparing an additive liquid of an atomizer. The method includes a step of removing cations from a liquid. This method not only preserves fragrance components, but also resolves problems of burnt coil and gunk buildup.

As used herein, "additive liquid of the atomizer" and "additive liquid" refer to a liquid used to be added to the electronic atomizer, so as to be able to provide a user with a sense of experience of blowing a cloud. The additive liquid of the atomizer may be in the form of oil or liquid. The additive liquid of the atomizer is prepared, for example, from a tobacco extract. An exemplary additive liquid may contain nicotine, an essence, an atomization solvent, and the like.

In the method of the present invention, a to-be-processed substance for which a removal step is performed may be a raw material used as the atomization liquid of the atomizer, that is, the tobacco extract, and the tobacco extract includes a component that provides inhaling experience for the user. For example, the tobacco extract may be in the form of liquid, paste, or solid, such as a lyophilized substance. The to-be-processed substance may alternatively be a product further added with another component (such as an essence or an atomization solvent) or further processed on the basis of a tobacco extract. For example, the to-be-processed substance may alternatively be an instantly available atomization liquid (which can be added to the atomizer for use) prepared from a tobacco extract, such as a commercially available atomization liquid.

In fact, currently, many studies in the art believe that the foregoing biological macromolecules in the additive liquid of the atomizer are the main cause of fouling of the atomizer, and that the ion exchange method is used to remove ions in the additive liquid of the atomizer to reduce fouling, burnt coil, and/or gunk buildup of the atomizer is not reported.

In some implementations, the method of the present invention does not include a step of removing macromolecules (such as polysaccharides, proteins, starch, and/or pectin).

In some implementations, the step of removing cations is performed by using a cation exchange resin. In the present invention, the type of the cation removed by the ion exchange method is not limited, and is determined by a to-be-processed object. In some implementations, the cations of the present invention refer to inorganic cations. For example, when a commercially available atomization liquid is processed, the removed cations may be one or more of manganese ions, iron ions, zinc ions, copper ions, potassium ions, magnesium ions, calcium ions, sodium ions, and the like. The present invention imposes no limitation on the type of a cation exchange resin, provided that cations in a liquid phase can be exchanged. For example, the cation exchange resin may be a cation exchange resin T-42h. The mass ratio of the to-be-processed liquid to the cation exchange resin is not specifically limited in the present invention, and an exemplary mass ratio is less than or equal to 10/1, for example, 10/1, 4/1, and 1/2.

The method of the present invention further includes a step of removing anions from the liquid. In some implementations, the step of removing anions is performed by using an anion exchange resin. In some implementations, the anions of the present invention refer to inorganic anions. In the present invention, a type of the anion removed by the ion exchange method is not limited, and is determined by a to-be-processed object. For example, when a commercially available atomization liquid is processed, the removed anions may be one or more of fluorine ions, chloride ions, nitrite ions, bromine ions, nitrate ions, sulfate ions, phosphate ions, and the like. The present invention imposes no limitation on the type of an anion exchange resin, provided that anions in a liquid phase can be exchanged. For example, the model of the anion exchange resin may be D201. The mass ratio of the to-be-processed liquid to the anion exchange resin is not specifically limited in the present invention, and an exemplary mass ratio is less than or equal to 10/1, for example, 10/1, 4/1, and 1/2.

In some implementations, the step of removing cations may be performed before the step of removing anions. For example, the step of removing cations includes: adding a cation exchange resin whose mass is 1/10 to 2/1 of the liquid, stirring, and filtering to obtain supernatant. Next, the step of removing anions include: taking the above supernatant; and adding an anionic exchange resin whose mass is 1/10 to 2/1 of the obtained supernatant, stirring, and filtering. For example, stirring and filtering may be performed at a rotation speed of 120 rpm for 4h at the normal temperature.

In some other implementations, the step of removing cations may be performed after the step of removing anions.

Processing duration when an ion exchange resin is used is not particularly limited in the present invention, provided that most corresponding ions can be removed.

In some implementations, when the to-be-processed object is a raw material of an atomization liquid, for example, a tobacco extract, after cations and/or anions are removed, the products of the removal steps may be compounded with a substance such as an atomization solvent and/or an essence to prepare an additive liquid.

In some other implementations, the method for preparing an additive liquid of an atomizer according to the present invention includes:
obtaining a tobacco extract; and
using electrodialysis processing to obtain a liquid with an electrical conductivity of less than or equal to 1000 µS/cm.

In the present invention, a device used for electrodialysis is not limited. For example, the device used for electrodialysis may be a CR-DTM homogeneous membrane electrodialysis apparatus.

For example, the electrical conductivity of the liquid processed by the method in the present invention may be less than or equal to 800 µS/cm, less than or equal to 600 µS/cm, less than or equal to 500 µS/cm, less than or equal to 400 µS/cm, less than or equal to 300 µS/cm, less than or equal to 200 µS/cm, less than or equal to 100 µS/cm, less than or equal to 50 µS/cm, less than or equal to 40 µS/cm, and less than or equal to 30 µS/cm.

In the method of the present invention, a voltage when electrodialysis is used is 1 V to 30 V, for example, 2 V, 3 V, 4 V, 5 V, 6 V, 7 V, 8 V, 9 V, 10 V, 11 V, 12 V, 13 V, 14 V, 15 V, 16 V, 17 V, 18 V, 19 V, 20 V, 21 V, 22 V, 23 V, 24 V, 25 V, 26 V, 27 V, 28 V, 29 V.

In the method of the present invention, a current when electrodialysis is used is 0.05 A to 20 A, for example 0.1 A, 0.5 A, 1 A, 2 A, 3 A, 4 A, 5 A, 6 A, 7 A, 8 A, 9 A, 10A, 11 A, 12A, 13 A, 14 A, 15 A, 16 A, 17 A, 18 A, 19 A.

In the method of the present invention, duration when electrodialysis is used is 0.1 hours to 24 hours, for example, greater than 0.2 hours, greater than 0.5 hours, greater than 1 hour, greater than 2 hours, greater than 3 hours, greater than 4 hours, greater than 6 hours, greater than 8 hours, greater than 10 hours, greater than hours.

In some implementations, the method of the present invention further includes a step of compounding the tobacco extract with a substance such as an atomization solvent and/or an essence. For example, the step of compounding is performed before electrodialysis.

Before the step of removing cations or before electrodialysis, the method of the present invention further includes a step of diluting the liquid with water, where the viscosity of the diluted liquid is 1 cp to 100 cp. Dilution reduces the viscosity of the liquid, facilitating the addition of a cation exchange resin (optionally, and an anion exchange resin). Alternatively, liquid fluidity is increased, so as to facilitate the electrodialysis circulation. Dilution with water can give or enhance a medium environment to which ions can migrate. The diluting is performed by adding water with a volume greater than 0.5 and less than or equal to 10 times a volume of the to-be-processed substance.

In this dilution, not only a liquid viscosity is moderate, but also cations and/or anions are removed. That a large quantity of water needs to be removed in the step of removing water is avoided, thereby shortening duration of removing water and improving efficiency of removing water. In a specific implementation, deionized water is used for dilution. Deionized water can be used to dilute without introducing a large amount of ions.

After the step of removing cations or after electrodialysis, the method of the present invention further includes a step of removing moisture. In some preferred implementations, the step of removing moisture is after the step of removing anions or after electrodialysis. Removing moisture can increase the concentration of the additive liquid, so as to avoid affecting the inhaling experience when the additive liquid is used to prepare the atomization liquid or when the additive liquid is used as the atomization liquid. For example, moisture may be removed by rotary evaporation or freeze drying.

An additive liquid of an atomizer is also provided and the additive liquid is prepared by using the method of the present invention. Such an additive liquid removes at least most inorganic cations, such as 50%, 60%, 70%, 80%, 90%, 95%, 96%, 97%, 99% inorganic cations are removed. Preferably, most inorganic anions are also removed, such as 50%, 60%, 70%, 80%, 90%, 95%, 96%, 97%, 99% inorganic anions are removed. More preferably, most organic acids and organic bases are also removed, for example, 50%, 60%, 70%, 80%, 90%, 95%, 96%, 97%, 99% organic acids and organic bases are removed. Not only fragrance components are preserved, but also problems of burnt coil and gunk buildup are resolved.

An atomizer, including a liquid storage chamber, an atomization component, and the additive liquid described is also provided. The liquid storage chamber is configured to accommodate the additive liquid. The atomization component is in fluid communication with the liquid storage chamber and is configured to form an aerosol from the additive liquid.

An atomization apparatus, including the foregoing atomizer and a battery component is also disclosed. The battery component is configured to supply power to the atomizer.

An additive liquid of an atomizer for use of improving fouling, burnt coil, and/or gunk buildup of the atomizer is also disclosed.

The following further describes the present invention in detail with reference to specific embodiments. The objective thereof is merely illustrative and is not intended to limit the scope of the present invention. In the following embodiments, an XLY atomization liquid, a ZBY atomization liquid, a DFY atomization liquid, and an NB2 atomization liquid are used, each containing 10wt%-20wt% of tobacco extract, 10wt%-20wt% of essence, and 60wt%-80wt% of atomization solvent. A tobacco extract (BL) is also used.

The following Embodiments 1 and 9-12 are not according to the invention and are present for illustration purposes only.

### EMBODIMENT 1

Add the XLY atomization liquid to a beaker, add a cation exchange resin T-42h with a mass of 1/4 of the mass of a material liquid, stir at the normal temperature at 120 rpm for 4h, and filter to obtain supernatant.

Take a proper amount of the supernatant, add an anion exchange resin D201 with a mass of 1/4 of the mass of the material liquid, stir at the normal temperature at 120 rpm for 4h, filter, and obtain an atomization liquid A.

### EMBODIMENT 2

Preprocessing of the atomization liquid:

Take a proper amount of ZBY atomization liquid, add water with a volume 10 times the volume thereof to dilute, and provide a medium environment for electric field migration.

### Cation and anion removal:

Place the diluted atomization liquid in an electrodialysis apparatus, start the solution circulation process, set a voltage 14 V and a current value 7.5 A, start the electric field, stop the device after 3 hours of circulation, and take out the processed atomization liquid.

### Moisture removal:

Remove the moisture by means of rotary evaporation, and obtain an atomization liquid B.

### EMBODIMENT 3

### Preprocessing of the atomization liquid:

Take a proper amount of DFY atomization liquid, add water with a volume 10 times the volume thereof to dilute, and provide a medium environment for electric field migration.

### Cation and anion removal:

Place the diluted atomization liquid in an electrodialysis apparatus, start the solution circulation process, set a voltage 14 V and a current value 7.5 A, start the electric field, stop the device after 3 hours of circulation, and take out the processed atomization liquid.

### Moisture removal:

Remove the moisture by means of rotary evaporation, and obtain an atomization liquid C.

### EMBODIMENT 4

### Preprocessing of the atomization liquid:

Take a proper amount of NB2 atomization liquid, add water with a volume 10 times the volume thereof to dilute, and provide a medium environment for electric field migration.

### Cation and anion removal:

Place the diluted atomization liquid in an electrodialysis apparatus, start the solution circulation process, set a voltage 14 V and a current value 7.5 A, start the electric field, stop the device after 3 hours of circulation, and take out the processed atomization liquid.

### Moisture removal:

Remove the moisture by means of rotary evaporation, and obtain an atomization liquid D.

### EMBODIMENT 5

### Preprocessing of the atomization liquid:

Take a proper amount of ZBY atomization liquid, add water with a volume 10 times the volume thereof to dilute, and provide a medium environment for electric field migration.

### Cation and anion removal:

Place the diluted atomization liquid in an electrodialysis apparatus, start the solution circulation process, set a voltage 30 V and a current value 20 A, start the electric field, stop the device after 10 min of circulation, and take out the processed atomization liquid.

### Moisture removal:

Remove the moisture by means of rotary evaporation, and obtain an atomization liquid E.

### EMBODIMENT 6

### Preprocessing of the atomization liquid:

Take a proper amount of ZBY atomization liquid, add water with a volume 10 times the volume thereof to dilute, and provide a medium environment for electric field migration.

### Cation and anion removal:

Place the diluted atomization liquid in an electrodialysis apparatus, start the solution circulation process, set a voltage 1 V and a current value 0.05 A, start the electric field, stop the device after 10h of circulation, and take out the processed atomization liquid.

### Moisture removal:

Remove the moisture by means of rotary evaporation, and obtain an atomization liquid F.

### EMBODIMENT 7

### Preprocessing of the atomization liquid:

Take a proper amount of ZBY atomization liquid, add water with a volume 0.5 times the volume thereof to dilute, and provide a medium environment for electric field migration.

### Cation and anion removal:

Place the diluted atomization liquid in an electrodialysis apparatus, start the solution circulation process, set a voltage 14 V and a current value 7.5 A, start the electric field, stop the device after 3 hours of circulation, and take out the processed atomization liquid.

### Moisture removal:

Remove the moisture by means of rotary evaporation, and obtain an atomization liquid G.

### EMBODIMENT 8

### Preprocessing of the tobacco extract:

Take a proper amount of tobacco extract BL, add water with a volume 10 times the volume thereof to dilute, and provide a medium environment for electric field migration.

### Cation and anion removal:

Place the diluted atomization liquid in an electrodialysis apparatus, start the solution circulation process, set a voltage 14 V and a current value 7.5 A, start the electric field, stop the device after 3 hours of circulation, and take out the processed atomization liquid.

### Moisture removal:

Remove the moisture by means of rotary evaporation, and obtain a liquid h.

### Preparation of the atomization liquid:

Mix the liquid h with the essence and the atomization solvent at a weight ratio of 1:15:84, heat, blend, and obtain an atomization liquid H.

### EMBODIMENT 9

Add the XLY atomization liquid to a beaker, add a cation exchange resin T-42h with a mass of 1/4 of the mass of a material liquid, stir at the normal temperature at 120 rpm for 4h, and filter to obtain an atomization liquid I.

### EMBODIMENT 10

Add the XLY atomization liquid to a beaker, add a cation exchange resin T-42h with a mass of 2 times of the mass of a material liquid, stir at the normal temperature at 120 rpm for 4h, and filter to obtain supernatant.

Take a proper amount of the supernatant, add an anion exchange resin D201 with a mass of 2 time of the mass of the material liquid, stir at the normal temperature at 120 rpm for 4h, filter, and obtain an atomization liquid J.

### EMBODIMENT 11

Add the XLY atomization liquid to a beaker, add a cation exchange resin T-42h with a mass of 1/10 of the mass of a material liquid, stir at the normal temperature at 120 rpm for 4h, and filter to obtain supernatant.

Take a proper amount of the supernatant, add an anion exchange resin D201 with a mass of 1/10 of the mass of the material liquid, stir at the normal temperature at 120 rpm for 4h, filter, and obtain an atomization liquid K.

### EMBODIMENT 12

Add the ZBY atomization liquid to a beaker, add a cation exchange resin T-42h with a mass of 1/4 of the mass of a material liquid, stir at the normal temperature at 120 rpm for 4h, and filter to obtain supernatant.

Take a proper amount of the supernatant, add an anion exchange resin D201 with a mass of 1/4 of the mass of the material liquid, stir at the normal temperature at 120 rpm for 4h, filter, and obtain an atomization liquid L.

### TEST EXAMPLE 1 - ELECTRICAL CONDUCTIVITY TEST

An electrical conductivity tester is used to measure the electrical conductivity of the atomization liquid and the liquid obtained in Embodiments 1 to 12. Results are shown in Table 1 below.

**Table 1 Electrical conductivity of the atomization liquid and the liquid obtained in Embodiments 1 to 12**

| Atomization liquid | A | B | C | D | E | F | G | H | I | J | K | L |
|---|---|---|---|---|---|---|---|---|---|---|---|---|
| Electrical conductivity ([µs/CM) | 105 | 26 | 32 | 30 | 55 | 460 | 108 | 43 | 161 | 93 | 214 | 96 |

### TEST EXAMPLE 2 - TEST OF CONCENTRATION OF IONS, ORGANIC ACIDS, AND ORGANIC BASES

The component changes in the atomization liquid or the tobacco extract before and after the processing in Embodiments 1 to 12 are tested by using inductively coupled plasma emission spectroscopy (ICP), and the results are shown in Tables 2-24.

**Table 2 Ion concentration in the XLY atomization liquid before processing and in the XLY atomization liquid after processing according to Embodiment 1**

| Concentration of inorganic cations in the XLY atomization liquid (mg/kg) | | | | | | | | |
|---|---|---|---|---|---|---|---|---|
| Ion type | Manganese ion | Iron ion | Zinc ion | Copper ion | Potassium ion | Magnesium ion | Calcium ion | Sodium ion |
| Before processing | 1.12 | 3.24 | 3.43 | ND | 13546 | 346 | 634 | ND |
| After processing | 0.06 | 0.118 | 0.233 | ND | 169.3 | 36.6 | 132 | ND |

| Concentration of inorganic anions in the XLY atomization liquid (mg/kg) | | | | | | | | |
|---|---|---|---|---|---|---|---|---|
| Ion type | Fluorine ion F⁻ | Chloride ion Cl⁻ | Nitrite ion NO²⁻ | Bromine ion Br⁻ | Nitrate ion NO³⁻ | Sulfate ion SO₄²⁻ | Phosphate ion PO₄³⁻ | |
| Before processing | 55.6 | 5757.5 | ND | ND | 7278.2 | ND | ND | |
| After processing | 12.7 | 321.7 | ND | ND | 163.4 | ND | ND | |

Nd indicates that a corresponding ion concentration does not reach the lower limit for instrument detection, which is the same below.

It can be learned from Table 2 that the inorganic ion concentration in the XLY atomization liquid after ion exchange processing decreases substantially.

**Table 3 Cation concentration in the atomization liquid before processing and in the atomization liquid after processing according to Embodiments 2 to 4**

| | Concentration of inorganic cations in the atomization liquid (mg/kg) | | | | | | | |
|---|---|---|---|---|---|---|---|---|
| Ion type | Manganese/ Mn | Iron/ Fe | Zinc/Zn | Copper/ Cu | Potassium/ K | Magnesium/ Mg | Calcium/ Ca | Sodium/ Na |
| ZBY atomization liquid (before processing) | 2.31 | 2.32 | 4.24 | 0.123 | 3971.45 | 151.11 | 77.73 | 45.2 |
| ZBY atomization liquid (after processing) | 0.09 | 0.281 | 0.653 | ND | 20.45 | ND | ND | 17.96 |
| DFY atomization liquid (before processing) | 4.31 | 6.93 | 2.83 | 0.386 | 2887.67 | 184.38 | 208.99 | 51.19 |
| DFY atomization liquid (after processing) | 0.657 | 4.592 | 1.409 | ND | 85.55 | 39.6 | 3.9 | 12.9 |
| NB2 atomization liquid (before processing) | ND | ND | ND | ND | 919.75 | 67.23 | 11.18 | 14.75 |
| NB2 atomization liquid (after processing) | ND | ND | ND | ND | 2.5 | ND | ND | 8.21 |

**Table 4 Anion concentration in the atomization liquid before processing and in the atomization liquid after processing according to Embodiments 2 to 4**

| | Inorganic anion concentration (mg/kg) | | | | | | |
|---|---|---|---|---|---|---|---|
| Ion type | Fluorine ion F⁻ | Chloride ion Cl⁻ | Nitrite ion NO²⁻ | Bromine ion Br⁻ | Nitrate NO³⁻ | Sulfate ion SO₄²⁻ | Phosphate ion PO₄³⁻ |
| ZBY atomization liquid (before processing) | 52.3 | 1878.4 | ND | ND | 1219.2 | ND | 41.3 |
| ZBY atomization liquid (after processing) | 27.2 | 31.7 | ND | ND | ND | ND | ND |
| DFY atomization liquid (before processing) | 16.7 | 798.4 | 52.6 | ND | 663.1 | ND | 347.1 |
| DFY atomization liquid (after processing) | 2.32 | 11.6 | 1.38 | ND | ND | ND | ND |
| NB2 atomization liquid (before processing) | ND | 2213.1 | ND | ND | 999.13 | 231.1 | ND |
| NB2 atomization liquid (after processing) | ND | ND | ND | ND | ND | ND | ND |

**Table 5 Organic base concentration in the atomization liquid before processing and in the atomization liquid after processing according to Embodiments 2 to 4**

| | Concentration of organic bases (µg/g) | | | | | |
|---|---|---|---|---|---|---|
| Organic base type | 2,3-bipyridine | Equisetum alkaloid | Myosmine | Anatabine | Nornicotine | Cotinine |
| ZBY atomization liquid (before processing) | 9.26 | 33.33 | 5.06 | 41.23 | 67.28 | 8.3 |
| ZBY atomization liquid (after processing) | 1.25 | 1.99 | 0.09 | 6.86 | 7.97 | 5.54 |
| DFY atomization liquid (before processing) | 10.88 | 27.03 | 4.62 | 36.67 | 69.97 | 13.06 |
| DFY atomization liquid (after processing) | 3.83 | 11.09 | 0.48 | 17.19 | 27.31 | 10.66 |
| NB2 atomization liquid (before processing) | 10.54 | 19.42 | 2.64 | 31.35 | 175.9 | 12.96 |
| NB2 atomization liquid (after processing) | 2.66 | 3.77 | 0.10 | 9.08 | 17.8 | 9.96 |

**Table 6 Organic acid concentration in the atomization liquid before processing and in the atomization liquid after processing according to Embodiments 2 to 4**

| | Organic acid concentration | | | |
|---|---|---|---|---|
| Organic acid type | Tartaric acid | Acetic acid | Propionic acid | 2-methylbutyric acid |
| ZBY atomization liquid (before processing) | 67.7 mg/g | 262 µg/g | 4.83 µg/g | 4.24 µg/g |
| ZBY atomization liquid (after processing) | ND | 153 µg/g | 3.91 µg/g | 3.27 µg/g |
| DFY atomization liquid (before processing) | 219 mg/g | 417 µg/g | 12.23 µg/g | 3.22 µg/g |
| DFY atomization liquid (after processing) | ND | 103 µg/g | ND | ND |
| NB2 atomization liquid (before processing) | 51.9 mg/g | 210 µg/g | ND | ND |
| NB2 atomization liquid (after processing) | ND | 65.6 µg/g | ND | ND |

The pH of the ZBY atomization liquid before processing is 5.23, and the pH of the ZBY atomization liquid after processing according to Embodiment 2 is 5.16. It can be learned from Table 3 to Table 6 that after electrodialysis processing, not only the concentration of inorganic cations and inorganic anions in the atomization liquid decreases significantly, but also the concentration of organic acids and organic bases in the atomization liquid decreases significantly.

Table 7 Concentration of cations and anions in the ZBY atomization liquid before processing and in the ZBY atomization liquid after processing according to Embodiment 5

| Concentration of inorganic cations in the ZBY atomization liquid (mg/kg) | | | | | | | | |
|---|---|---|---|---|---|---|---|---|
| Ion type | Manganese ion | Iron ion | Zinc ion | Copper ion | Potassium ion | Magnesium ion | Calcium ion | Sodium ion |
| Before processing | 2.31 | 2.32 | 4.24 | 0.123 | 3971.45 | 151.11 | 77.73 | 45.2 |
| After processing | ND | ND | ND | ND | 91.34 | 32.02 | 11.31 | 2.36 |

| Concentration of inorganic anions in the ZBY atomization liquid (mg/kg) | | | | | | | | |
|---|---|---|---|---|---|---|---|---|
| Ion type | Fluorine ion F⁻ | Chloride ion Cl⁻ | Nitrite ion NO²⁻ | Bromine ion Br⁻ | Nitrate ion NO³⁻ | Sulfate ion SO₄²- | Phosphate ion PO₄³⁻ | |
| Before processing | 52.3 | 1878.4 | ND | ND | 1219.2 | ND | 41.3 | |
| After processing | 19.34 | 21.33 | ND | ND | 31.64 | ND | ND | |

**Table 8 Concentration of organic bases in the ZBY atomization liquid before processing and in the ZBY atomization liquid after processing according to Embodiment 5**

| | Concentration of organic bases (µg/g) | | | | | |
|---|---|---|---|---|---|---|
| Organic base type | 2,3-bipyridine | Equisetum alkaloid | Myosmine | Anatabine | Nornicotine | Cotinine |
| ZBY atomization liquid (before processing) | 9.26 | 33.33 | 5.06 | 41.23 | 67.28 | 8.3 |
| ZBY atomization liquid (after processing) | 4.31 | 15.96 | 3.66 | 18.34 | 11.69 | 2.22 |

**Table 9 Concentration of organic acids in the ZBY atomization liquid before processing and in the ZBY atomization liquid after processing according to Embodiment 5**

| Organic acid type | Tartaric acid | Acetic acid | Propionic acid | 2-methylbutyric acid |
|---|---|---|---|---|
| ZBY atomization liquid (before processing) | 67.7 mg/g | 262 µg/g | 4.83 µg/g | 4.24 µg/g |
| ZBY atomization liquid (after processing) | ND | 113 µg/g | ND µg/g | 3.98 µg/g |

**Table 10 Concentration of cations and anions in the ZBY atomization liquid before processing and in the ZBY atomization liquid after processing according to Embodiment 6**

| Concentration of inorganic cations in the ZBY atomization liquid (mg/kg) | | | | | | | | |
|---|---|---|---|---|---|---|---|---|
| Ion type | Manganese ion | Iron ion | Zinc ion | Copper ion | Potassium ion | Magnesium ion | Calcium ion | Sodium ion |
| Before processing | 2.31 | 2.32 | 4.24 | 0.123 | 3971.45 | 151.11 | 77.73 | 45.2 |
| After processing | 2.11 | 1.94 | 3.36 | ND | 963.46 | 99.33 | 38.94 | 20.31 |

| Concentration of inorganic anions in the ZBY atomization liquid (mg/kg) | | | | | | | | |
|---|---|---|---|---|---|---|---|---|
| Ion type | Fluorine ion F⁻ | Chloride ion Cl⁻ | Nitrite ion NO²⁻ | Bromine ion Br⁻ | Nitrate ion NO³⁻ | Sulfate ion SO₄²⁻ | Phosphate ion PO₄³⁻ | |
| Before processing | 52.3 | 1878.4 | ND | ND | 1219.2 | ND | 41.3 | |
| After processing | 39.64 | 368.84 | ND | ND | 369.31 | ND | 39.6 | |

**Table 11 Concentration of organic bases in the ZBY atomization liquid before processing and in the ZBY atomization liquid after processing according to Embodiment 6**

| | Concentration of organic bases (µg/g) | | | | | |
|---|---|---|---|---|---|---|
| Organic base type | 2,3- bipyridine | Equisetum alkaloid | Myosmine | Anatabine | Nornicotine | Cotinine |
| ZBY atomization liquid (before processing) | 9.26 | 33.33 | 5.06 | 41.23 | 67.28 | 8.3 |
| ZBY atomization liquid (after processing) | 8.36 | 29.16 | 2.33 | 24.19 | 36.95 | 4.44 |

**Table 12 Concentration of organic acids in the ZBY atomization liquid before processing and in the ZBY atomization liquid after processing according to Embodiment 6**

| Organic acid type | Tartaric acid | Acetic acid | Propionic acid | 2-methylbutyric acid |
|---|---|---|---|---|
| ZBY atomization liquid (before processing) | 67.7 mg/g | 262 µg/g | 4.83 µg/g | 4.24 µg/g |
| ZBY atomization liquid (after processing) | 51 mg/g | 136.41 µg/g | 3.32 µg/g | 2.19 µg/g |

**Table 13 Concentration of cations and anions in the ZBY atomization liquid before processing and in the ZBY atomization liquid after processing according to Embodiment 7**

| Concentration of inorganic cations in the ZBY atomization liquid (mg/kg) | | | | | | | | |
|---|---|---|---|---|---|---|---|---|
| Ion type | Manganese ion | Iron ion | Zinc ion | Copper ion | Potassium ion | Magnesium ion | Calcium ion | Sodium ion |
| Before processing | 2.31 | 2.32 | 4.24 | 0.123 | 3971.45 | 151.11 | 77.73 | 45.2 |
| After processing | ND | ND | ND | ND | 52.15 | 36.94 | ND | ND |

| Concentration of inorganic anions in the ZBY atomization liquid (mg/kg) | | | | | | | | |
|---|---|---|---|---|---|---|---|---|
| Ion type | Fluorine ion F⁻ | Chloride ion Cl⁻ | Nitrite ion NO²⁻ | Bromine ion Br⁻ | Nitrate ion NO³⁻ | Sulfate ion SO₄²⁻ | Phosphate ion PO₄³⁻ | |
| Before processing | 52.3 | 1878.4 | ND | ND | 1219.2 | ND | 41.3 | |
| After processing | ND | 44.98 | ND | ND | 11.31 | ND | ND | |

**Table 14 Concentration of organic bases in the ZBY atomization liquid before processing and in the ZBY atomization liquid after processing according to Embodiment 7**

| | Concentration of organic bases (µg/g) | | | | | |
|---|---|---|---|---|---|---|
| Organic base type | 2,3-bipyridine | Equisetum alkaloid | Myosmine | Anatabine | Nornicotine | Cotinine |
| ZBY atomization liquid (before processing) | 9.26 | 33.33 | 5.06 | 41.23 | 67.28 | 8.3 |
| ZBY atomization liquid (after processing) | 2.64 | 11.36 | ND | 13.66 | 8.94 | 7.36 |

**Table 15 Concentration of organic acids in the ZBY atomization liquid before processing and in the ZBY atomization liquid after processing according to Embodiment 7**

| Organic acid type | Tartaric acid | Acetic acid | Propionic acid | 2-methylbutyric acid |
|---|---|---|---|---|
| ZBY atomization liquid (before processing) | 67.7 mg/g | 262 µg/g | 4.83 µg/g | 4.24 µg/g |
| ZBY atomization liquid (after processing) | ND | 113 µg/g | 1.94 µg/g | 2.68 µg/g |

**Table 16 Concentration of cations and anions in the tobacco extract before processing and in the tobacco extract after processing according to Embodiment 8**

| Concentration of inorganic cations in the tobacco extract BL (mg/kg) | | | | | | | | |
|---|---|---|---|---|---|---|---|---|
| Ion type | Manganese ion | Iron ion | Zinc ion | Copper ion | Potassium ion | Magnesium ion | Calcium ion | Sodium ion |
| Before processing | 9.64 | ND | ND | ND | 9761.31 | 1643.61 | 365.13 | 91.11 |
| After processing | ND | ND | ND | ND | 23.66 | 16.31 | ND | ND |

| Concentration of inorganic anions in the tobacco extract BL (mg/kg) | | | | | | | | |
|---|---|---|---|---|---|---|---|---|
| Ion type | Fluorine ion F⁻ | Chloride ion Cl⁻ | Nitrite ion NO²⁻ | Bromine ion Br⁻ | Nitrate ion NO³⁻ | Sulfate ion SO₄²⁻ | Phosphate ion PO₄³⁻ | |
| Before processing | 52.3 | 1878.4 | ND | ND | 1219.2 | ND | 41.3 | |
| After processing | ND | 44.98 | ND | ND | 11.31 | ND | ND | |

**Table 17 Concentration of organic bases in the tobacco extract before processing and in the tobacco extract after processing according to Embodiment 8**

| | Concentration of organic bases (µg/g) | | | | | |
|---|---|---|---|---|---|---|
| Organic base type | 2,3- bipyridine | Equisetum alkaloid | Myosmine | Anatabine | Nornicotine | Cotinine |
| Tobacco extract BL (before processing) | 69.3 | 98.9 | 148.9 | 329.4 | 490.2 | 382.3 |
| Tobacco extract BL (after processing) | 29.9 | 19.24 | 21.9 | 8.33 | 49.2 | 11.7 |

**Table 18 Concentration of organic acids in the tobacco extract before processing and in the tobacco extract after processing according to Embodiment 8**

| Organic acid type | Tartaric acid | Acetic acid | Propionic acid | 2-methylbutyric acid |
|---|---|---|---|---|
| Tobacco extract BL (before processing) | 104.3 mg/g | 493.2 µg/g | ND | 21.23 µg/g |
| Tobacco extract BL (after processing) | 11.3 mg/g | 149.2 µg/g | ND | 4.92 µg/g |

It can be learned from Table 16 to Table 18 that after processing, the concentration of cations, anions, organic bases, and organic acids in the tobacco extract decreases significantly, that is, the method in the present invention may also be used to process the tobacco extract.

**Table 19 Concentration of cations and anions in the XLY atomization liquid before processing and in the XLY atomization liquid after processing according to Embodiment 9**

| Concentration of inorganic cations in the XLY atomization liquid (mg/kg) | | | | | | | | |
|---|---|---|---|---|---|---|---|---|
| Ion type | Manganese ion | Iron ion | Zinc ion | Copper ion | Potassium ion | Magnesium ion | Calcium ion | Sodium ion |
| Before processing | 1.12 | 3.24 | 3.43 | ND | 13546 | 346 | 634 | ND |
| After processing | ND | ND | 1.34 | ND | 64.31 | 21.32 | 11.64 | ND |

| Concentration of inorganic anions in the XLY atomization liquid (mg/kg) | | | | | | | | |
|---|---|---|---|---|---|---|---|---|
| Ion type | Fluorine ion F⁻ | Chloride ion Cl⁻ | Nitrite ion NO²⁻ | Bromine ion Br⁻ | Nitrate ion NO³⁻ | Sulfate ion SO₄²⁻ | Phosphate ion PO₄³⁻ | |
| Before processing | 55.6 | 5757.5 | ND | ND | 7278.2 | ND | ND | |
| After processing | 54.16 | 541.64 | ND | ND | 7000.64 | ND | ND | |

**Table 20 Concentration of cations and anions in the XLY atomization liquid before processing and in the XLY atomization liquid after processing according to Embodiment 10**

| Concentration of inorganic cations in the XLY atomization liquid (mg/kg) | | | | | | | | |
|---|---|---|---|---|---|---|---|---|
| Ion type | Manganese ion | Iron ion | Zinc ion | Copper ion | Potassium ion | Magnesium ion | Calcium ion | Sodium ion |
| Before processing | 1.12 | 3.24 | 3.43 | ND | 13546 | 346 | 634 | ND |
| After processing | ND | ND | 1.34 | ND | 13.16 | 19.84 | ND | ND |

| Concentration of inorganic anions in the XLY atomization liquid (mg/kg) | | | | | | | | |
|---|---|---|---|---|---|---|---|---|
| Ion type | Fluorine ion F⁻ | Chloride ion Cl⁻ | Nitrite ion NO²⁻ | Bromine ion Br⁻ | Nitrate ion NO³⁻ | Sulfate ion SO₄²⁻ | Phosphate ion PO₄³⁻ | |
| Before processing | 55.6 | 5757.5 | ND | ND | 7278.2 | ND | ND | |
| After processing | ND | 121.64 | ND | ND | ND | ND | ND | |

**Table 21 Concentration of cations and anions in the XLY atomization liquid before processing and in the XLY atomization liquid after processing according to Embodiment 11**

| Concentration of inorganic cations in the XLY atomization liquid (mg/kg) | | | | | | | | |
|---|---|---|---|---|---|---|---|---|
| Ion type | Manganese ion | Iron ion | Zinc ion | Copper ion | Potassium ion | Magnesium ion | Calcium ion | Sodium ion |
| Before processing | 1.12 | 3.24 | 3.43 | ND | 13546 | 346 | 634 | ND |
| After processing | ND | ND | 2.46 | ND | 423.16 | 114.84 | 163.47 | ND |

| Concentration of inorganic anions in the XLY atomization liquid (mg/kg) | | | | | | | | |
|---|---|---|---|---|---|---|---|---|
| Ion type | Fluorine ion F⁻ | Chloride ion Cl⁻ | Nitrite ion NO²⁻ | Bromine ion Br⁻ | Nitrate ion NO³⁻ | Sulfate ion SO₄²⁻ | Phosphate ion PO₄³⁻ | |
| Before processing | 55.6 | 5757.5 | ND | ND | 7278.2 | ND | ND | |
| After processing | 16.97 | 463.14 | ND | ND | 1302.1 | ND | ND | |

**Table 22 Concentration of cations and anions in the ZBY atomization liquid before processing and in the ZBY atomization liquid after processing according to Embodiment 12**

| Concentration of inorganic cations in the ZBY atomization liquid (mg/kg) | | | | | | | | |
|---|---|---|---|---|---|---|---|---|
| Ion type | Manganese ion | Iron ion | Zinc ion | Copper ion | Potassium ion | Magnesium ion | Calcium ion | Sodium ion |
| Before processing | 2.31 | 2.32 | 4.24 | 0.123 | 3971.45 | 151.11 | 77.73 | 45.2 |
| After processing | ND | ND | ND | ND | 31.49 | 16.97 | 6.99 | ND |

| Concentration of inorganic anions in the ZBY atomization liquid (mg/kg) | | | | | | | | |
|---|---|---|---|---|---|---|---|---|
| Ion type | Fluorine ion F⁻ | Chloride ion Cl⁻ | Nitrite ion NO²⁻ | Bromine ion Br⁻ | Nitrate ion NO³⁻ | Sulfate ion SO₄²⁻ | Phosphate ion PO₄³⁻ | |
| Before processing | 52.3 | 1878.4 | ND | ND | 1219.2 | ND | 41.3 | |
| After processing | 16.98 | 43.06 | ND | ND | 18.94 | ND | ND | |

**Table 23 Concentration of organic bases in the ZBY atomization liquid before processing and in the ZBY atomization liquid after processing according to Embodiment 12**

| Concentration of organic bases (µg/g) | | | | | | |
|---|---|---|---|---|---|---|
| Organic base type | 2,3- bipyridine | Equisetum alkaloid | Myosmine | Anatabine | Nornicotine | Cotinine |
| ZBY atomization liquid (before processing) | 9.26 | 33.33 | 5.06 | 41.23 | 67.28 | 8.3 |
| ZBY atomization liquid (after processing) | ND | 2.97 | ND | 4.16 | 11.16 | 3.97 |

**Table 24 Concentration of organic acids in the ZBY atomization liquid before processing and in the ZBY atomization liquid after processing according to Embodiment 12**

| Organic acid type | Tartaric acid | Acetic acid | Propionic acid | 2-methylbutyric acid |
|---|---|---|---|---|
| ZBY atomization liquid (before processing) | 67.7 mg/g | 262 µg/g | 4.83 µg/g | 4.24 µg/g |
| ZBY atomization liquid (after processing) | 38.09 mg/g | 94.94 µg/g | 3.91 µg/g | 3.27 µg/g |

### TEST EXAMPLE 3 - TEST OF ATOMIZATION AMOUNT AND ATTENUATION RATE

Separately load the above atomization liquid into an atomizer with a battery of 6.5W power, inhale 1200 puffs, and test the atomization amount (mg/puff) and the vapor attenuation rate (%) (atomization amount: average mass of atomized aerosol per puff of an electronic atomization device attenuation rate: attenuation of the average atomization amount of the first 50 puffs of the electronic atomization device compared with the average atomization amount of the last 50 puffs). The atomization amounts and the vapor attenuation rates of the atomization liquid before processing and the atomization liquid after processing according to Embodiments 1-7 and Embodiments 9-12 are shown in Tables 25-29 and Tables 31-34. The atomization amounts and the vapor attenuation rates of the atomization liquid including the tobacco extract before processing and the atomization liquid including the tobacco extract after processing according to Embodiment 8 are shown in Table 30.

**Table 25 Atomization amounts and vapor attenuation rates of the XLY atomization liquid before processing and the XLY atomization liquid after processing according to Embodiment 1**

| XLY atomization liquid | Atomization amount (mg/puff) | Vapor attenuation rate (%) |
|---|---|---|
| Before processing | 6.74 | 18.91% |
| After processing | 7.14 | 7.84% |

As shown in Table 25, the ion exchange method has no significant impact on the atomization amount. The vapor attenuation rate decreases from 18.91% to 7.84% and is reduced by about 60%.

**Table 26 Atomization amounts and vapor attenuation rates of the ZBY atomization liquid, the DFY atomization liquid, and the NB2 atomization liquid before processing and the ZBY atomization liquid, the DFY atomization liquid, and the NB2 atomization liquid after processing according to Embodiments 2 to 4**

| Atomization liquid | Atomization amount (mg/puff) | Vapor attenuation rate (%) |
|---|---|---|
| ZBY atomization liquid (before processing) | 6.35 | 22.10% |
| ZBY atomization liquid (after processing) | 8.64 | 6.88% |
| DFY atomization liquid (before processing) | 6.98 | 18.90% |
| DFY atomization liquid (after processing) | 8.96 | 5.66% |
| NB2 atomization liquid (before processing) | 7.12 | 16.40% |
| NB2 atomization liquid (after processing) | 9.23 | 4.98% |

As shown in Table 26, the electrodialysis method not only increases the atomization amount by about 30%, but also reduces the vapor attenuation rate by about 70%.

**Table 27 Atomization amounts and vapor attenuation rates of the ZBY atomization liquid before processing and the ZBY atomization liquid after processing according to Embodiment 5**

| ZBY atomization liquid | Atomization amount (mg/puff) | Vapor attenuation rate (%) |
|---|---|---|
| Before processing | 6.35 | 22.10% |
| After processing | 7.36 | 9.68% |

**Table 28 Atomization amounts and vapor attenuation rates of the ZBY atomization liquid before processing and the ZBY atomization liquid after processing according to Embodiment 6**

| ZBY atomization liquid | Atomization amount (mg/puff) | Vapor attenuation rate (%) |
|---|---|---|
| Before processing | 6.35 | 22.10% |
| After processing | 6.66 | 19.63% |

It can be learned from Tables 27 and 28 that adjusting the parameters (voltage, current, and circulation time) at electrodialysis can still improve the atomization amount and the vapor attenuation rate of the ZBY atomization liquid.

**Table 29 Atomization amounts and vapor attenuation rates of the ZBY atomization liquid before processing and the ZBY atomization liquid after processing according to Embodiment 7**

| ZBY atomization liquid | Atomization amount (mg/puff) | Vapor attenuation rate (%) |
|---|---|---|
| Before processing | 6.35 | 22.10% |
| After processing | 7.98 | 10.66% |

**Table 30 Atomization amounts and vapor attenuation rates of the atomization liquid added with an unprocessed tobacco extract and the atomization liquid added with a tobacco extract processed according to Embodiment 8**

| Atomization liquid added with 1wt% tobacco extract (BL) | Atomization amount (mg/puff) | Vapor attenuation rate (%) |
|---|---|---|
| Unprocessed | 4.91 | 29.40% |
| Processed | 6.66 | 7.31% |

It can be learned from Table 30 that, compared with the atomization liquid added with the 1wt% unprocessed tobacco extract, the atomization amount of the atomization liquid added with 1wt% processed tobacco extract increases by about 35% and the vapor attenuation rate decreases by about 75%.

**Table 31 pH, atomization amounts, and vapor attenuation rates of the XLY atomization liquid before processing and the XLY atomization liquid after processing according to Embodiment 9**

| XLY atomization liquid | pH | Atomization amount (mg/puff) | Vapor attenuation rate (%) |
|---|---|---|---|
| Before processing | 5.23 | 6.74 | 18.91% |
| After processing | 2.11 | 6.98 | 13.41% |

**Table 32 pH, atomization amounts, and vapor attenuation rates of the XLY atomization liquid before processing and the XLY atomization liquid after processing according to Embodiment 10**

| XLY atomization liquid | pH | Atomization amount (mg/puff) | Vapor attenuation rate (%) |
|---|---|---|---|
| Before processing | 5.23 | 6.74 | 18.91% |
| After processing | 3.94 | 7.68 | 9.41% |

**Table 33 pH, atomization amounts, and vapor attenuation rates of the XLY atomization liquid before processing and the XLY atomization liquid after processing according to Embodiment 11**

| XLY atomization liquid | pH | Atomization amount (mg/puff) | Vapor attenuation rate (%) |
|---|---|---|---|
| Before processing | 5.23 | 6.74 | 18.91% |
| After processing | 4.14 | 6.88 | 14.32% |

**Table 34 Atomization amounts and vapor attenuation rates of the ZBY atomization liquid before processing and the ZBY atomization liquid after processing according to Embodiment 12**

| ZBY atomization liquid | Atomization amount (mg/puff) | Vapor attenuation rate (%) |
|---|---|---|
| Before processing | 6.35 | 22.10% |
| After processing | 8.21 | 8.39% |

With reference to Table 26, compared with the ZBY atomization liquid processed by using the ion exchange method in Embodiment 12, the ZBY atomization liquid processed by using the electrodialysis method in Embodiment 2 has a larger atomization amount and a higher improvement degree of the vapor attenuation rate.

### TEST EXAMPLE 4 - TEST OF FOULING

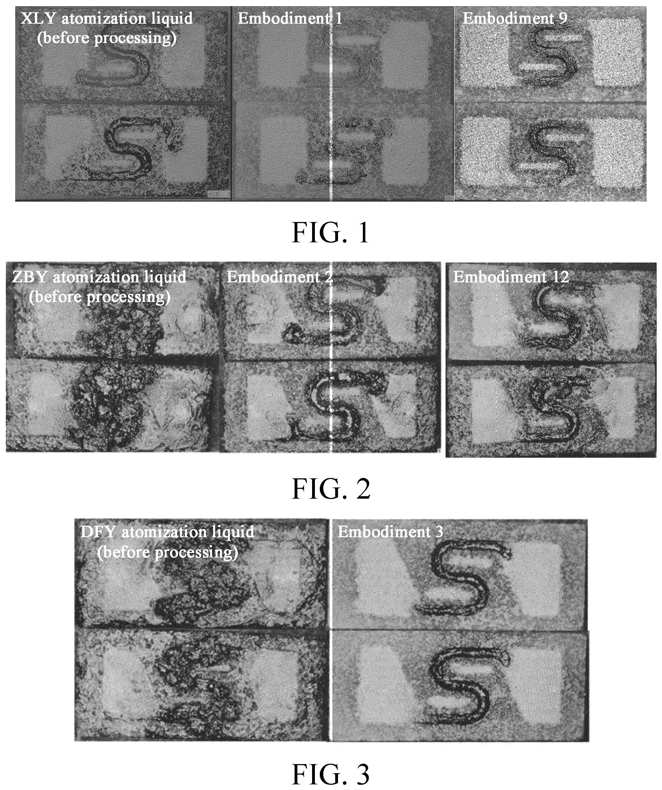

Separately load the XLY atomization liquid before processing and the XLY atomization liquid after processing according to Embodiment 1 and Embodiment 9 into the atomizer with a battery of 6.5W power, inhale 1200 puffs, take out the atomization core, cut off and photograph the atomization core. Results are shown in FIG. 1. It can be learned from FIG. 1 that, compared with the XLY atomization liquid before processing, the fouling of the XLY atomization liquid processed by using the cation exchange resin according to Embodiment 9 decreases in the electronic atomization device. Compared with the XLY atomization liquid processed by only using the cation exchange resin in Embodiment 9, the XLY atomization liquid processed by using the cation exchange resin and the anion exchange resin in Embodiment 1 decreases more in fouling in the electronic atomization device.

Separately load the ZBY atomization liquid before processing and the ZBY atomization liquid after processing according to Embodiment 2 and Embodiment 12 into the atomizer with a battery of 6.5W power, both inhale 1600 puffs, separately take out the atomization core, cut off and photograph the atomization core. Results are shown in FIG. 2. It can be learned from FIG. 2 that, compared with the ZBY atomization liquid before processing, the ZBY atomization liquid processed by using the ion exchange method according to Embodiment 12 has less fouling in the atomization apparatus. However, compared with the ZBY atomization liquid processed by using the ion exchange method according to Embodiment 12, the ZBY atomization liquid processed by using the electrodialysis method according to Embodiment 2 decreases more in fouling in the electronic atomization device.

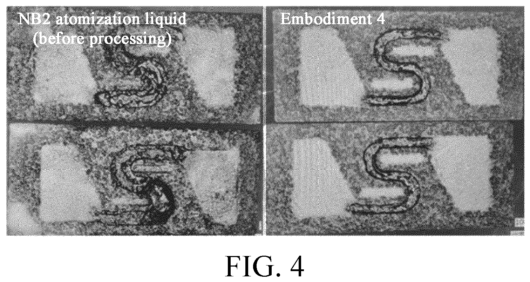

Separately load the DFY atomization liquid before processing and the DFY atomization liquid after processing according to Embodiment 3 into the atomizer with a battery of 6.5W power, both inhale 1600 puffs, separately take out the atomization core, cut off and photograph the atomization core. Results are shown in FIG. 3. Separately load the NB2 atomization liquid before processing and the NB2 atomization liquid after processing according to Embodiment 4 into the atomizer with a battery of 6.5W power, both inhale 1200 puffs, separately take out the atomization core, cut off and photograph the atomization core. Results are shown in FIG. 4. It can be learned from FIG. 2, FIG. 3, and FIG. 4 that, for all the atomization liquids with different fouling amounts in the electronic atomization device, electrodialysis processing can significantly reduce the fouling.

### TEST EXAMPLE 5 - TEST OF SENSORY INHALATION

The sensory inhalation results, by 20 people, of the ZBY atomization liquid, the DFY atomization liquid, and the NB2 atomization liquid before processing, and the ZBY atomization liquid, the DFY atomization liquid, and the NB2 atomization liquid after processing according to Embodiments 2-4 are described as follows: 19 people believe that the ZBY atomization liquid processed according to Embodiment 2 is not different from the ZBY atomization liquid before processing. 18 people believe that the DFY atomization liquid processed according to Embodiment 3 is not different from the DFY atomization liquid before processing. 19 people believe that the NB2 atomization liquid processed according to Embodiment 4 is not different from the NB2 atomization liquid before processing.

The same 20 people inhale the ZBY atomization liquid before processing and the ZBY atomization liquid after processing according to Embodiment 12, and the results are described as follows: Compared with the ZBY atomization liquid before processing, 11 people believe that the ZBY atomization liquid after processing according to Embodiment 12 is not different, and 9 people believe that the ZBY atomization liquid after processing according to Embodiment 12 is softer and sourer.

It can be learned from the foregoing inhalation results that, compared with the ZBY atomization liquid processed by using the ion exchange method in Embodiment 12, the mouthfeel of the ZBY atomization liquid processed by using the electrodialysis method in Embodiment 2 basically does not change. That is, the electrodialysis method can maintain the mouthfeel of the atomization liquid, which may be related to that the pH of the system does not change significantly.

In conclusion, the method for preparing an additive liquid of an atomizer in the present invention can help to implement long-term inhalation experience of a large vapor quantity and a large quantity of puffs, and can also avoid the problem of burnt coil or gunk buildup in the electronic atomization device during the service life.

The foregoing descriptions are merely exemplary embodiments of the present invention, and are not intended to limit the protection scope of the present invention.

While the invention has been illustrated and described in detail in the drawings and foregoing description, such illustration and description are to be considered illustrative or exemplary and not restrictive.

The terms used in the claims should be construed to have the broadest reasonable interpretation consistent with the foregoing description. For example, the use of the article "a" or "the" in introducing an element should not be interpreted as being exclusive of a plurality of elements. Likewise, the recitation of "or" should be interpreted as being inclusive, such that the recitation of "A or B" is not exclusive of "A and B," unless it is clear from the context or the foregoing description that only one of A and B is intended. Further, the recitation of "at least one of A, B and C" should be interpreted as one or more of a group of elements consisting of A, B and C, and should not be interpreted as requiring at least one of each of the listed elements A, B and C, regardless of whether A, B and C are related as categories or otherwise. Moreover, the recitation of "A, B and/or C" or "at least one of A, B or C" should be interpreted as including any singular entity from the listed elements, e.g., A, any subset from the listed elements, e.g., A and B, or the entire list of elements A, B and C.

## Claims

1. A method for preparing an additive liquid of an atomizer, the additive liquid refers to a liquid used to be added to the electronic atomizer, comprising:
removing cations; and
removing anions;
wherein the step of removing cations and the step of removing anions are simultaneously performed through electrodialysis;
wherein a voltage during the electrodialysis is 1 V to 30 V;
a current during the electrodialysis is 0.05 A to 20 A; and
a duration of the electrodialysis is 0.1 hour to 24 hours;
wherein, before the step of removing cations, the method further comprises diluting a to-be-processed substance with water to obtain a diluted liquid with a viscosity of 1 cp to 100 cp; and
wherein the diluting is performed by adding water with a volume greater than or equal to 0.5 and less than or equal to 10 times a volume of the to-be-processed substance,
wherein, after the removing cations, the method further comprises removing water.

2. The method of claim 1, wherein the cations are selected from a group comprising: manganese ions, iron ions, zinc ions, copper ions, potassium ions, magnesium ions, calcium ions, and sodium ions.

3. The method of claim 1 further comprising:
adding an atomization solvent and/or an essence.

4. The method of claim 1, wherein a voltage during the electrodialysis is 12 V to 16 V;
a current during the electrodialysis is 5 A to 10 A; and
a duration of the electrodialysis is 1 hour to 4 hours.

## Patentansprüche

1. Verfahren zum Herstellen einer Zusatzflüssigkeit eines Zerstäubers, wobei sich die Zusatzflüssigkeit auf eine Flüssigkeit bezieht, die dem elektronischen Zerstäuber zugesetzt wird, umfassend:
Entfernen von Kationen; und
Entfernen von Anionen;
wobei der Schritt des Entfernens von Kationen und der Schritt des Entfernens von Anionen gleichzeitig durch Elektrodialyse durchgeführt werden;
wobei eine Spannung während der Elektrodialyse 1 V bis 30 V beträgt;
ein Strom während der Elektrodialyse 0,05 A bis 20 A beträgt; und
eine Dauer der Elektrodialyse 0,1 Stunden bis 24 Stunden beträgt;
wobei das Verfahren vor dem Schritt des Entfernens von Kationen ferner Verdünnen einer zu verarbeitenden Substanz mit Wasser umfasst, um eine verdünnte Flüssigkeit mit einer Viskosität von 1 cp bis 100 cp zu erlangen; und
wobei das Verdünnen durch Zusetzen von Wasser mit einem Volumen von mehr als oder gleich dem 0,5- und weniger als oder gleich dem 10-fachen eines Volumens der zu verarbeitenden Substanz durchgeführt wird,
wobei das Verfahren nach dem Entfernen von Kationen ferner Entfernen von Wasser umfasst.

2. Verfahren nach Anspruch 1, wobei die Kationen aus einer Gruppe ausgewählt sind, die Folgendes umfasst: Manganionen, Eisenionen, Zinkionen, Kupferionen, Kaliumionen, Magnesiumionen, Calciumionen und Natriumionen.

3. Verfahren nach Anspruch 1, ferner umfassend:
Zusetzen eines Zerstäubungslösungsmittels und/oder einer Essenz.

4. Verfahren nach Anspruch 1, wobei eine Spannung während der Elektrodialyse 12 V bis 16 V beträgt;
ein Strom während der Elektrodialyse 5 A bis 10 A beträgt; und
eine Dauer der Elektrodialyse 1 Stunde bis 4 Stunden beträgt.

## Revendications

1. Procédé de préparation d'un liquide additif d'un atomiseur, le liquide additif désigne un liquide destiné à être ajouté à l'atomiseur électronique, comprenant :
l'élimination de cations ; et
l'élimination d'anions ;
dans lequel l'étape d'élimination de cations et l'étape d'élimination d'anions sont réalisées simultanément par électrodialyse ;
dans lequel une tension pendant l'électrodialyse est de 1 V à 30 V ;
un courant pendant l'électrodialyse est de 0,05 A à 20 A ; et
la durée de l'électrodialyse est de 0,1 heure à 24 heures ;
dans lequel, avant l'étape d'élimination de cations, le procédé comprend également la dilution d'une substance à traiter avec de l'eau pour obtenir un liquide dilué avec une viscosité de 1 cp à 100 cp ; et
dans lequel la dilution est réalisée en ajoutant de l'eau avec un volume supérieur ou égal à 0,5 et inférieur ou égal à 10 fois le volume de la substance à traiter,
dans lequel, après l'élimination de cations, le procédé comprend également l'élimination de l'eau.

2. Procédé selon la revendication 1, dans lequel les cations sont choisis dans un groupe comprenant : des ions manganèse, des ions fer, des ions zinc, des ions cuivre, des ions potassium, des ions magnésium, des ions calcium et des ions sodium.

3. Procédé selon la revendication 1, comprenant également :
l'ajout d'un solvant d'atomisation et/ou d'une essence.

4. Procédé selon la revendication 1, dans lequel une tension pendant l'électrodialyse est de 12 V à 16 V ;
un courant pendant l'électrodialyse est de 5 A à 10 A ; et
la durée de l'électrodialyse est de 1 heure à 4 heures.
